(19) Europäisches Patentamt
European Patent Office
Office européen des brevets

(11) Veröffentlichungsnummer : **0 075 065 B2**

# (12) NEUE EUROPÄISCHE PATENTSCHRIFT

(45) Veröffentlichungstag der neuen Patentschrift : **15.04.92 Patentblatt 92/16**

(51) Int. Cl.$^5$ : **C07C 213/04,** C07C 215/40, C07C 211/63, C07C 209/68, D06M 13/46, C11D 1/62, A01N 33/12

(21) Anmeldenummer : **82103156.4**

(22) Anmeldetag : **15.04.82**

## (54) Verfahren zur Herstellung von quartären Ammoniumverbindungen.

Die Akte enthält technische Angaben, die nach dem Eingang der Anmeldung eingereicht wurden und die nicht in dieser Patentschrift enthalten sind.

(30) Priorität : **15.09.81 DE 3136564**

(43) Veröffentlichungstag der Anmeldung : **30.03.83 Patentblatt 83/13**

(45) Bekanntmachung des Hinweises auf die Patenterteilung : **30.12.86 Patentblatt 86/52**

(45) Bekanntmachung des Hinweises auf die Entscheidung über den Einspruch : **15.04.92 Patentblatt 92/16**

(84) Benannte Vertragsstaaten : **AT BE CH DE FR GB IT LI NL**

(56) Entgegenhaltungen :
**DE-A- 1 619 081**
**DE-A- 2 424 269**
**FR-A- 999 703**
**US-A- 2 897 170**

(73) Patentinhaber : **Henkel Kommanditgesellschaft auf Aktien**
**Postfach 1100 Henkelstrasse 67**
**W-4000 Düsseldorf-Holthausen (DE)**

(72) Erfinder : **Rutzen, Horst, Dr.**
**Falkenweg 12**
**W-4018 Langenfeld (DE)**
Erfinder : **Petzold, Manfred**
**Am Falder 93**
**W-4000 Düsseldorf-Holthausen (DE)**



Jouve, 18, rue Saint-Denis, 75001 PARIS

**Beschreibung**

Zur Herstellung von quartären Ammoniumverbindungen geht man meist von einem tertiären Amin aus, das zur Quartärstufe alkyliert wird. Als Alkylierungsmittel läßt man dabei üblicherweise Ester starker Mineralsäuren, insbesondere Alkylhalogenide, Schwefel- oder Sulfonsäureester auf tertiäre Amine einwirken ; gelegentlich werden auch andere Ester benutzt. Eine weitere bekannte Möglichkeit zur Alkylierung tertiärer Amine stellt die Reaktion von Alkylenoxiden mit tertiären Aminen in Gegenwart von Wasser dar. Darüber hinaus gibt es noch eine Reihe anderer Möglichkeiten zur Herstellung von quartären Ammoniumverbindungen aus den leicht zugänglichen tertiären Aminen (vgl. J. Goerdeler in Houben-Weyl Methoden der organischen Chemie, 4. Auflage, Band 11/2, Seite 592 ff.). Quartäre Ammoniumverbindungen mit einem oder mehreren langen aliphatischen Rest weisen antimikrobielle beziehungsweise, textilweichmachende und antistatischmachende Eingenschaften auf und finden breite Anwendung. Man erhält derartige Verbindungen, indem man entweder tertiäre Amine mit langen alphatischen Resten und/oder aromatischen Resten alkyliert oder die Alkylierung mit Alkylierungsmitteln vornimmt, die ihrerseits lange aliphatische oder aromatische Reste enthalten, wobei natürlich auch sowohl im tertiären Amin als auch im Alkylierungsmittel lange aliphatische oder aromatische Reste vorhanden sein können. Ein Nachteil der bekannten Verfahren zur Herstellung der quartären Ammoniumverbindungen ist, daß häufig unter Druck gearbeitet werden muß, gelegentlich Lösungsmittel erforderlich sind, die Ausbeute meist unbefriedigend ist und häufig mit einem Überschuß an einem der Reaktionsteilnehmeer und-/oder bei hohen Temperaturen gearbeitet werden muß. So werden in der deutschen Patentanmeldung DE-A-16 19 081.1 Behandlungsmittel für Textilien beschrieben, deren Wirkstoffe man durch Umsetzen von Epoxiden mit einem 5-fachen Überschuß an Trimethylamin oder durch Reaktion bei 150 bis 250°C erhält. Überschüssiges Amin wird nach Ende der Umsetzung durch Destillation wieder entfernt. In der älteren, nicht vorveröffentlichten deutschen Patentanmeldung P 31 16 087.5 (D 6299) wird daher vorgeschlagen, Epoxidverbindungen, die endständige Epoxydgruppen aufweisen, mit dem Salz eines tertiären Amins in Gegenwart von quartären Ammoniumverbindungen als Katalysator umzusetzen.

Es wurde nun gefunden, daß man quartäre Ammoniumverbindungen durch Quarternieren eines tertiären Amins mit einer Epoxidverbindung, die wenigstens eine endständige Epoxygruppe aufweist, herstellen kann ohne die geschilderten Nachteile der bekannten Verfahren des Standes der Technik in Kauf nehmen zu müssen. Die erfindungsgemäße Herstellung ist dadurch gekennzeichnet, daß man das tertiäre Amin mit einer Epoxidverbindung, die entweder ein Epoxyalkan der allgemeinen Formel I

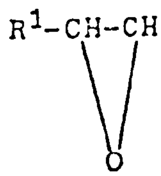

(I)

in der $R^1$ eine lineare oder verzweigte aliphatische Kohlenwasserstoffgruppe mit 2n Kohlenstoffatomen wobei n ganze Zahlen von 2 bis 8 sind oder eine Gruppe der allgemeinen Formel II

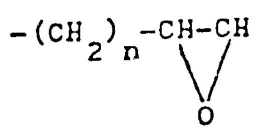

(II)

mit n = 4 bis 16 bedeutet, oder sie entsprechen einem Glycidether der allgemeinen Formel III

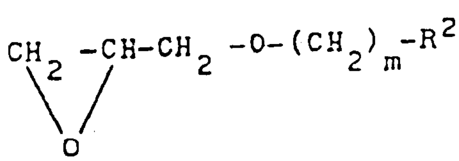

(III)

in der m einen Wert von 1 bis 10 hat und $R^2$ Wasserstoff oder eine aliphatische Kohlenwasserstoffgruppe mit 1 bis 24 Kohlenstoffatomen oder eine Gruppe der allgemeinen Formel IV

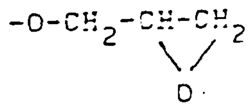 (IV)

bedeutet, ist in der Hitze bei Normaldruck umsetzt, wobei das Reaktionsgemisch frei von organischen Lösungsmitteln ist und das tertiäre Amin zunächst zum Teil als Salz und zum Teil als freies Amin eingesetzt wird und die zur vollständigen Salzbildung benötigte Säuremenge am Ende der Umsetzung zugefügt wird.

Diese teilweise Salzbildung kann man dabei auf zweierlei Art vornehmen : Einmal kann man 1 Aminäquivalent mit weniger als 1 Säureäquivalent teilweise zu einem umsetzen und dieses Umsetzungsprodukt mit 1 Epoxidäquivalent quaternieren. Zum anderen kann man mehr als 1 Aminäquivalent, das man mit 1 Säureäquivalent umgesetzt hat, mit 1 Epoxidäquivalent quaternieren. In beiden Fällen läuft die Quaternierungsreaktion in dem zunächst zweiphasigen Reaktionsgemisch überraschend schnell ab und führt zu einem homogenen Reaktionsprodukt. Die bezogen auf vollständige Salzbildung stöchiometrisch erforderliche restliche Säuremenge wird gegen Ende der Reaktion dem Reaktionsansatz zugegeben. Da dies bei der an zweiter Stelle genannten Verfahrensvariante zu einem nennenswerten Gehalt an nicht quarterniertem Aminsalz führt, das in manchen Fällen Stört, wird die zuerst genannte Verfahrensvariante bevorzugt.

Das Gemisch aus Amin und Aminsalz wird zur Umsetzung mit der Epoxydverbindung vorzugsweise in Wasser gelöst eingesetzt. Man kann dabei das Gemisch in einer ausreichenden Menge Wasser auflösen oder die Bilding des Salzes vornehmen, indem man zu dem in Wasser gelösten Amin die Säure hinzufügt und dann die so gebildete Aminsalzlösung mit der Epoxidverbindung umsetzt. Als eine günstige Reaktionstemperatur hat sich 40-100°C erwiesen, wobei eine Temperatur zwischen 80 und 95 °C sich als besonders günstig herausgestellt hat. Der Grad der Salzbildung des Amins liegt beim erfindungsgemäßen Verfahren bei 90 bis 50 Mol-%, wobei der Bereich von 80 bis 60 Mol-% bevorzugt wird. Das heißt, die zur vollständigen Salzbildung am Ende der Reaktion zuzusetzente Säuremenge beträgt 10 bis 50 Mol-%, vorzugsweise 20 bis 40 Mol-% der Stöchlometrischen Säuremenge. Zur Vermeidung von überschüssigen Mengen an nicht quaterniertem Salz von tertiärem Amin im Reaktionsprodukt besteht der Reaktionsansatz insbesondere aus einem Gemisch, das zu Beginn der Reaktion auf 1 Epoxidäquivalent 1 Aminäquivalent und 0.9 bis 0.5 vorzugsweise 0.8 bis 0.6 Säureäquivalent enthält, dem man am Ende der Reaktion, die man über die Bestimmung des Epoxidgenaltes des Reaktionsgemisches leicht verfolgen kann, 0,1 bis 0.5, vorzugsweise 0.2 bis 0.4 Säureäquivalent zufügt. Von den als Ausgangsstoffe einzusetzenden Epoxidverbindungen sind 1.2-Epoxyalkane bevorzugt. Diese werden in bekannter Weise aus den entsprechenden 1.2-Monoolefinen bzw. Olefin-Gemischen erhalten, die beispielsweise durch Polymerisation von Ethylen mit organischen Aluminiumverbindungen als Katalysatorenoder durch thermisches Cracken von Paraffinkohlenwasserstoffen erhalten werden.

Beispiele für bevorzugte Epoxyalkane sind die Verbindungen 1.2-Epoxyhexan, 1.2-Epoxyoctan, 1.2-Epoxydecan, 1.2-Epoxydodecan, 1.2-Epoxytetradecan, 1.2-Epoxyhexadecan, 1.2-Epoxyoctadecan. Ebenfalls geeignet sind Epoxidgemische, wie zum Beispiel $C_{12-14}$-1.2-Epoxid mit zirka 70 Gewichtsprozent $C_{12}$- und zirka 30 Gewichtsprozent $C_{14}$-Epoxyalkan oder $C_{16/18}$-1,2-Epoxid mit zirka 40 Gewichtsprozent $C_{16}$- und zirka 60 Gewichtsprozent $C_{18}$-Epoxyalkan. Weiterhin bevorzugt sind Di-Epoxyalkane mit 8 bis 20 Kohlenstoffatomen und zwei endständigen Epoxygruppen, wie beispielsweise 1,2-7,8-Diepoxyoctan, 1,2-9,10-Diepoxydecan und ähnliche Verbindungen. Auch Mono- oder Diglycidether wie Hexadecylmonoglycidether und 1,4-Butandioldiglycidether sind bevorzugte Epoxidverbindungen mit endständigen Epoxidgruppen.

Geeignete tertiäre Amine sind insbesondere Stärker basische Amine wie zum Beispiel Trimethylamin, Dimethylbenzylamin, Triethylamin, Tributylamin, Dimethylhexylamin, Dimethylaurylamin, Dimethylethanolamin, Dimethylpropanolamin,N-β-Hydroxydecyl-N-β-hydroxyethyl-N-methylamin,N-β-Hydroxyhexadecyl-N-β-hydroxyethylamin, Methyldiethanolamin, Dimethylaminopropandiol, tertiäre Diamine wie zum Beispiel Tetramethylethylendiamin oder Tetramethylpropylendiamin-1.3, ferner Pyridin, Picolin, Pipecolin, N-Methylpiperidin, N-Methylpyrrolidin, Chinuclidin.

Als Säurekomponente des Aminsalzes sind anorganische Säuren wie beispielsweise Satzsäure, Schwefelsäure, Salpetersäure, Phosphorsäure, Brom-, Jod-, oder Fluorwasserstoff, Borsäure, Konhlensäure oder saure Salze, wie zum Beispiel Natriumhydrogensulfat oder Natriumhydrogenphosphat geeignet. Ferner kann die Säurekomponente auch eine oder mehrere organische Säuren sein, wie etwa Ameisensäure, Essigsäure, Bernsteinsäure, Benzoesäure, Amphotere Verbindungen, wie zum Beispiel Dimethylaminoessigsäure, kommen ebenfalls in Frage. Außerdem sind geeignete Säuren organische Sulfonsäuren, z. B. p-Toluol-sulfonsäure. Amidosulfonsäure. Phosphonsäure, z. B. 1-Hydroxyethan-1,1-diphosphonsäure, Amino-tris-(methylenphosphonsäure) 2-Phosphonobutan-1,2,4-tricarbonsäure, Phosphinsäure oder Alkylschwefelsäure.

Das neue Verfahren zeichnet sich gegenüber den Verfahren des Standes der Technik dadurch aus. daß

es bei vergleichsweise geringem Materialeinsatz ohne Anwendung von Überdruck bei relativ niedrigen Reaktionstemperaturen und kürzeren Reaktionszeiten durchgeführt wird und Endprodukte in hoher Reinheit mit großen Ausbeuten liefert.

Erfindungsgemäß hergestellte Reaktionsprodukte mit nur einem langkettigen aliphatischen oder einem aromatischen Rest oder zwei Alkyl- oder Alkenyl-Resten mit weniger als etwa 10 Kohlenstoffatomen und im übrigen kurzkettigen Alkyl-Resten weisen antimikrobielle Eingenschaften auf. Man erhält diese Verbindungen, in dem man entweder Epoxyalkane mit beispielsweise 10 bis 20 Kohlenstoffatomen mit tertiären Aminen mit ausschließlich kurzen Alkyl- oder Hydroxylalkyl- oder Aralkyl-Resten umsetzt oder indem man von einem Epoxyalkan mit etwa 6 bis 10 Kohlenstoffatomen ausgeht, das man mit einem indem man von einem Epoxyalkane tertiären Amin mit einem $C_{10}$- bis $C_{20}$-Alkyl- oder Alkenyl-Rest, der sich von Fettsäuren ableitet, umsetzt. Mit zunehmender Anzahl und Kettenlänge von langkettigen Resten weisen die Reaktionsprodukte zunehmend ausgeprägte textilweichmachende und antistatischmachende Eigenschaften auf. Je nach chemischer Konstitution der Verbindungen sind gleitende Übergänge zu beobachten.

Textilweichmachende Verbindungen mit einem $C_{10}$- bis $C_{20}$-Alkyl-, Hydroxyalkyl- oder Alkenyl-Rest und einem $C_{10}$-$C_{20}$-Hydroxyalkyl-Rest und im übrigen kurzen Resten enthält man entsprechend, indem man ein tertiäres Amin mit einem $C_{10}$- bis $C_{20}$-Alkyl- oder Hydroxyalkyl- oder Alkenyl-Rest mit einem $C_{10}$-$C_{20}$-Halogenhydrin umsetzt.

Die erfindungsgemäß hergestellten Verfahrensprodukte finden Verwendung als Textilweichmacher oder -antistatika beziehungsweise als Antimikrobika. Eine Verwendung als Textilweichmacher erfolgt beispielsweise in flüssigen Mitteln zur Wäschenachbehandlung, die neben dem erfindungsgemäß hergestellten Wirkstoff zusätzlich wenigstens eine weitere Verbindung aus der Gruppe Trägermittel, Lösungsmittel, Verdünnungsmittel, Emulgator, Farbstoff, Duftstoff, Konservierungsmittel, Viskositätsstellmittel, Trübungsmittel und eventuell weitere übliche Zusatzstoffe enthalten.

Mittel zur Wäschenachbehandlung haben beispielsweise folgende Zusammensetzung :

2-80 Gew.-% erfindungsgemäß hergestellte Verbindungen mit 2 langen Hydroxyalkyl-, Alkyl- oder Alkenyl-Resten.

| | |
|---|---|
| 20-98 Gew.-% | Träger, Lösungsmittel, Verdünnungsmittel |
| 0-20 Gew.-% | Emulgator |
| 0- 3 Gew.-% | Konservierungsmittel |
| 0- 5 Gew.-% | Duftstoff |
| 0- 1 Gew.-% | Farbstoff |

Rest Viskositätsstellmittel, Trübungsmittel, gegebenenfalls saure Verbindungen und sonstige übliche Zusatzstoffe.

Auch wenn man die Verfahrensprodukte zu entsprechend zusammengesetzten Waschmitteln, die wenigstens eine waschaktive Verbindung enthalten, hinzufügt, können sie eine weichmachende Wirkung entfalten. Derartige Waschmittel basieren vorzugsweise auf Rezepturen mit nichtionischen Tensiden. Trägt man die Verfahrensprodukte, gegebenenfalls zusammen mit üblichen Hilfs- und Zusatzstoffen auf textile Flächengebilde als Träger auf, können diese auch als Tumblerhilfsmittel Verwendung finden.

## Beispiele

### Beispiel 1

44,57 g (0,5 Mol) Dimethylethanolamin wurden in 309,19 g Wasser mit 39,44 g (0,4 Mol) 37 %iger HCl versetzt. Bei 95 °C wurden anschließend 94,0 g (0,5 Mol) 1,2-Epoxydodecan (Epoxidzahl 8,51) hinzugefügt und bei dieser Temperatur 6 Stunden gerührt. Die Epoxidzahl lag dann bei 0,01. Schließlich wurden 9,86 g (0,1 Mol) 37 %ige HCl zugefügt. Die klare Lösung enthielt 97,3 % der theoretisch möglichen Menge an quartärer Ammoniumverbindung.

### Beispiel 2

Wie in Beispiel 1 wurden 44,57 g (0,5 Mol) Dimethylethanolamin eingesetzt, die diesmal mit 29,58 g (0,3 Mol) 37 %iger HCl vermischt wurden. Bei 95 °C wurden 94,0 g (0,5 Mol) 1,2-Epoxydodecan (Epoxidzahl 8,51) zugegeben. Nach 2 Stunden Reaktionszeit war die Lösung klar, nach 6 Stunden ließ sich kein Epoxid mehr nachweisen. Schließlich fügte man 19,72 g (0,2 Mol) 37%ige HCl zu. Die klare gelbliche Lösung enthielt 98,9 % der theoretisch möglichen Menge an Quartärsalz.

Beispiel 3

Zu 92,6 g (0,5 Mol) Dimethyldecylamin (Aminzahl 301,6) wurden 609 g Wasser und anschließend unter Rühren und Kühlen mit Leitungswasser 39,41 g (0,4 Mol) 37 %ige HCl gegeben. Nach Zugabe von 94,34 g (0,5 Mol) 1,2-Epoxydodecan (Epoxidzahl 8,48) wurde 4 Stunden auf 95 °C erhitzt. Epoxid ließ sich dann nicht mehr nachweisen. Man fügte weiter 9,85 g (0,1 Mol) 37 %ige HCl zu und erhielt ein gelbliches klares Gel. Der Umsatz war praktisch vollständig.

Vergleichbare Ergebnisse erhielt man, wenn man unter ähnlichen Bedingungen anstelle des in diesem Beispiel verwendeten Dimethyldecylamin, Methyl-2-hydroxydodecylethanolamin, Dimethylkokosalkylamin, Dimethyltalgalkylamin, Diethyltalgalkylamin oder andere tertiäre Amine mit Fettalkylresten einsetzte.

**Patentansprüche**

1. Verfahren zur Herstellung von quartären Ammoniumverbindungen durch Umsetzen eines tertiären Amins mit einer Epoxidverbindung, dadurch gekennzeichnet, daß man das tertiäre Amin mit einer Expoxidverbindung, die entweder ein Epoxyalkan der allgemeinen Formel I

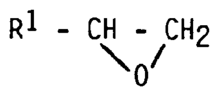 (I)

in der $R^1$ eine lineare oder verzweigte aliphatische Kohlenwasserstoff gruppe mit 2 n-Kohlenstoffatomen, wobei n ganze Zahlen von 2 bis 8 sind, oder eine Gruppe der allgemeinen Formel II

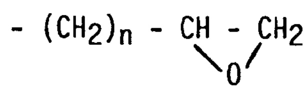 (II)

mit n = 4 bis 16
bedeutet, oder einen Glycidether der allgemeinen Formel III

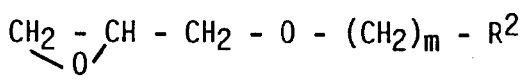 (III)

in der m einen Wert von 1 bis 10 hat und $R^2$ Wasserstoff oder eine aliphatische Kohlenwasserstoffgruppe mit 1 bis 24 Kohlenstoffatomen oder eine Gruppe der allgemeinen Formel IV

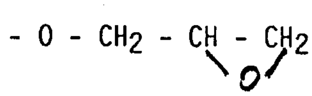 (IV)

beteudet, ist in der Hitze bei Normaldruck umsetzt, wobei das Reaktionsgemisch frei von organischen Lösungsmitteln ist und das tertiäre Amin zunächst zum Teil als Salz und zum Teil als freies Amin eingesetzt wird und die zur vollständigen Salzbildung benötigte Säuremenge am Ende der Umsetzung zugefügt wird.

2. Verfahren nach Anspruch 1, dadurch gekennzeichnet, daß man ein Aminäquivalent mit weniger als einem Säureäquivalent umsetzt und dieses Umsetzungsprodukt mit einem Epoxidäquivalent quaterniert.

3. Verfahren nach den Ansprüchen 1 und 2, dadurch gekennzeichnet,'daß man ein Aminäquivalent mit 0,9 bis 0,5, vorzugsweise 0.8 bis 0,6 Säureäquivalent reagieren läßt und dann mit 1 Epoxidäquivalent umsetzt.

4. Verfahren nach den Ansprüchen 1 bis 3, dadurch gekennzeichnet, daß man das Aminsalz in Wasser gelöst einsetzt.

5. Verfahren nach den Ansprüchen 1 bis 4, dadurch gekennzeichnet, daß man das tertiäre Amin in Wasser löst, zu dieser Lösung die Säure hinzufügt und dann die so gebildete Aminsalzlösung mit der Epoxidverbindung umsetzt.

6. Verfahren nach den Ansprüchen 1 bis 5, dadurch gekennzeichnet, daß man die Umsetzung bei Temperaturen zwischen 40 und 100°C, vorzugsweise zwischen 80 und 95°C unter Hormaldruck vornimmt.

7. Verfahren nach den Ansprüchen 1 bis 7, dadurch gekennzeichnet, daß man eine Epoxidverbindung der Formel I, in der $R^1$ eine lineare aliphatische Kohlenwasserstoffgruppe mit 8 bis 18 Kohlenstoffatomen bedeutet, mit einem tertiären Amin, das eine Alkyl-, Hydroxyalkyl- oder Alkenylgruppe mit 10 bis 20 Kohlenstoffatomen aufweist, und das teilweise als Salz vorliegt, umsetzt.

## Claims

1. A process for the production of quaternary ammonium compounds by reaction of a tertiary amine with an epoxide compound, characterized in that the tertiary amine is reacted with an epoxide compound, which is either an epoxyalkane corresponding to general formula I

$$R^1 - CH - CH_2 \qquad (I)$$
$$\backslash \;\; O \;\; /$$

in which $R^1$ is a linear or branched aliphatic hydrocarbon group containing 2n carbon atoms, where n is an integer of 2 to 8, or a group corresponding to general formula (II)

$$-(CH_2)_n - CH - CH_2 \qquad (II)$$
$$\backslash \;\; O \;\; /$$

in which n = 4 to 16,
or a glycidyl ether corresponding to general formula (III)

$$CH_2 - CH - CH_2 - O - (CH_2)_m - R^2 \qquad (III)$$
$$\backslash \;\; O \;\; /$$

in which m has a value of 1 to 10 and $R^2$ is hydrogen or an aliphatic hydrocarbon group containing 1 to 24 carbon atoms or a group corresponding to general formula IV

$$- O - CH_2 - CH - CH_2 \qquad (IV)$$
$$\backslash \;\; O \;\; /$$

with heating under normal pressure, the reaction mixture being free from organic solvents and the tertiary amine initially being used partly as salt and partly as free amine and the quantity of acid required for complete salt formation being added at the end of the reaction.

2. A process as claimed in claim 1, characterized in that one amine equivalent is reacted with less than one acid equivalent and the reaction product is quaternized with one epoxide equivalent.

3. A process as claimed in claims 1 and 2, characterized in that one amine equivalent is allowed to react with 0.9 to 0.5 and preferably 0.8 to 0.6 acid equivalent and is then reacted with 1 epoxide equivalent.

4. A process as claimed in claims 1 to 3, characterized in that the amine salt is used in solution in water.

5. A process as claimed in claims 1 to 4, characterized in that the tertiary amine is dissolved in water, the acid is added to the resulting solution and the amine salt solution thus formed is reacted with the epoxide compound.

6. A process as claimed in claims 1 to 5, characterized in that the reaction is carried out under normal pressure at temperatures of 40 to 100°C and preferably at temperatures of 80 to 95°C.

7. A process as claimed in claims 1 to 7, characterized in that an epoxide compound corresponding to formula I, in which $R^1$ is a linear aliphatic hydrocarbon group containing 8 to 18 carbon atoms, is reacted with a

tertiary amine which contains an alkyl, hydroxyalkyl or alkenyl group containing 10 to 20 carbon atoms and which is partly present in salt form.

## Revendications

1. Procédé d'obtention de composés d'ammonium quaternaires par réaction d'une amine tertiaire avec un composé époxidique, caractérisé en ce que l'on fait réagir à chaud et à pression normale l'amine tertiaire avec un composé époxydique qui correspond soit à un époxyalcane de formule générale (I) :

$R_1 - CH - CH_2$
\ /  (I)
O

dans laquelle $R_1$ est un radical hydrocarboné aliphatique linéaire ou ramifié ayant 2n atomes de carbone (dans lequel n est un nombre entier de 2 à 8) ou à un groupe de formule générale (II) :

$-(CH_2)_n - CH - CH_2$
\ /  (II)
O

avec n = 4 à 16
ou à un éther glycidique de formule générale (III) :

$CH_2-CH-CH_2-O-(CH_2)_m-R_2$
\ /  (III)
O

dans laquelle m a une valeur de 1 à 10 et $R_2$ signifie de l'hydrogène ou un radical hydrocarboné aliphatique ayant de 1 à 24 atomes de carbone ou bien à un groupe de formule générale ((IV) :

$-O-CH_2-CH-CH_2$
\ /  (IV)
O

procédé dans lequel le mélange réactionnel est dépourvu de solvant organique et l'amine tertiaire est mise en oeuvre en premier lieu en partie sous forme de sel et en partie sous forme d'amine libre et dans lequel la quantité d'acide rendue nécessaire pour la formation complète de sel est ajoutée à la fin de la réaction.

2. Procédé selon la revendication 1, caractérisé en ce qu'on transforme un équivalent amine avec moins d'un équivalent acide et que l'on quaternise ce produit de transformation avec un équivalent époxy.

3. Procédé selon les revendications 1 et 2, caractérisé en ce que l'on fait réagir un équivalent amine avec 0,9 à 0,5, de préférence avec 0,8 à 0,6 équivalent acide et qu'ensuite on transforme avec un équivalent époxy.

4. Procédé selon les revendications 1 à 3, caractérisé en ce qu'on met en oeuvre le sel d'amine dissout dans l'eau.

5. Procédé selon les revendications 1 à 4, caractérisé en ce qu'on dissout l'amine tertiaire dans l'eau, on ajoute à cette solution l'acide, et ensuite, on transforme la solution de sel d'amine ainsi formée par le composé époxy.

6. Procédé selon les revendications 1 à 5, caractérisé en ce qu'on procède à la transformation à des températures comprises entre 40 et 100°C, de préférence entre 80 et 95°C, sous pression normale.

7. Procédé selon les revendications 1 à 6, caractérisé en ce que l'on fait réagir un composé époxydique

de formule (I) dans laquelle $R_1$ désigne un radical hydrocarboné aliphatique avec 8 à 18 atomes de carbone, avec une amine tertiaire qui comporte un groupe alkyle, hydroxyalkyle, ou bien un groupe alkanyle, avec 10 à 20 atomes de carbone, et qui se présente partiellement sous forme de sel.